(19) **Europäisches Patentamt**
**European Patent Office**
**Office européen des brevets**

(11) **EP 3 794 757 B1**

(12) **EUROPEAN PATENT SPECIFICATION**

(45) Date of publication and mention of the grant of the patent:
**08.03.2023 Bulletin 2023/10**

(21) Application number: **18724851.3**

(22) Date of filing: **14.05.2018**

(51) International Patent Classification (IPC):
**H04L 1/18** $^{(2006.01)}$

(52) Cooperative Patent Classification (CPC):
**H04L 1/1835;** H04L 2001/0093

(86) International application number:
**PCT/EP2018/062393**

(87) International publication number:
**WO 2019/219164 (21.11.2019 Gazette 2019/47)**

(54) **RETRANSMISSION OF MESSAGES USING A NON-ORTHOGONAL MULTIPLE ACCESS (NOMA) COMMUNICATION SYSTEM**

NEUÜBERTRAGUNG VON NACHRICHTEN UNTER VERWENDUNG EINES KOMMUNIKATIONSSYSTEMS MIT NICHTORTHOGONALEM MEHRFACHZUGRIFF (NOMA)

RETRANSMISSION DE MESSAGES À L'AIDE D'UN SYSTÈME DE COMMUNICATION À ACCÈS MULTIPLE NON-ORTHOGONAL (NOMA)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.03.2021 Bulletin 2021/12**

(73) Proprietor: **TELEFONAKTIEBOLAGET LM ERICSSON (PUBL)**
**164 83 Stockholm (SE)**

(72) Inventors:
• **MAKKI, Behrooz**
**435 43 Pixbo (SE)**

• **HASHEMI, Mona**
**Ontario, K2P1J5 Ottawa (CA)**
• **BEHRAVAN, Ali**
**113 36 Stockholm (SE)**

(74) Representative: **Ericsson Patent Development Torshamnsgatan 21-23 164 80 Stockholm (SE)**

(56) References cited:
**US-A1- 2016 191 174    US-A1- 2017 310 417**
**US-A1- 2017 338 915**

**Description**

TECHNICAL FIELD

Disclosed are embodiments related to non-orthogonal multiple access (NOMA) communication systems.

BACKGROUND

The design of multiple access schemes is of interest in the design of cellular telecommunication systems. The goal of multiple access schemes is to provide multiple user equipments (UEs) (i.e., wireless communication devices, such as, for example, smartphones, tablets, phablets, smart sensors, wireless Internet-of Things (IoT) devices, etc., that are capable of wirelessly communicating with an access point) with radio resources in a spectrum, cost, and complexity-efficient manner. In 1G-3G wireless communication systems, frequency division multiple access (FDMA), time division multiple access (TDMA) and frequency division multiple access (CDMA) schemes have been introduced. Long-Term Evolution (LTE) and LTE-Advanced employ orthogonal frequency division multiple access (OFDMA) and single-carrier (SC)-FDMA as orthogonal multiple access (OMA) schemes. Such orthogonal designs have the benefit that there is no mutual interference among UEs, leading to high system performance with simple receivers.

Recently, non-orthogonal multiple access (NOMA) has received considerable attention as a promising multiple access technique for LTE and 5G systems. With NOMA, two or more UEs may share the same time resource and frequency resource as well as, if applicable, the same code resource and beam resource. Particularly, 3GPP has considered NOMA in different applications. For instance, NOMA has been introduced as an extension of the network-assisted interference cancellation and suppression (NAICS) for intercell interference (ICI) mitigation in LTE Release 12 as well as a study item of LTE Release 13, under the name of "Downlink multiuser superposition transmission." Also, in recent 3GPP meetings, it is decided that new radio (NR) should target to support (at least) uplink NOMA, in addition to the OMA approach.

US patent publication (20160191174) describes soft packet combining for superposition coding.

SUMMARY

NOMA exploits channel difference between or among UEs to improve spectrum efficiency. Generally, the highest gain of NOMA is observed in the cases where a "strong" UE (i.e., a UE experiencing a good channel condition with a base station, such as, for example, a UE located in the center of a cell) and a "weak" UE (i.e., a UE having a poor channel condition with the base station, such as, for example, a UE located at or near a cell edge) are grouped (i.e., use the same radio resources). However, the implementation of NOMA implies: 1) use of more advanced and complex receivers to enable multiuser signal separation, 2) more difficult synchronization, and 3) a higher signal decoding delay

For example, considering downlink NOMA, the strong UE typically uses successive interference cancellation (SIC) to first decode and remove the message for the weak UE and then decode its own message interference-free. As a result, compared to conventional OMA scheme, NOMA-based data transmission leads to higher receiver complexity. Also, compared to OMA-based systems, the two-step decoding process of the strong UE may lead to larger end-to-end transmission delay for the strong UE, as well as for the weak UE (e.g. in scenarios in which their signals should be synchronized). Also, there is a probability that the strong UE cannot correctly decode the message of the weak UE affecting the successful decoding probability of its own message.

Also, while using NOMA outperforms OMA in terms of sum rate, the sum rate gain of NOMA is at the cost possible rate loss for the weak UE (e.g., the cell-edge UE). This is because, with downlink NOMA, the weak UE considers the signal of the strong UE as interference and uses the typical OMA-based decoder to decode its own message. Thus, there is a significant probability that neither the strong UE nor the weak UE can decode the message intended for it, thus requiring the network to re-transmit the messages.

This disclosure describes, among other things, a method that improves downlink (DL) and uplink (UL) message throughput in a NOMA system. The method may be referred to as a "smart" hybrid automatic repeat request (HARQ) based method.

The invention is carried out in accordance with the appended claims.

BRIEF DESCRIPTION OF THE DRAWINGS

The accompanying drawings, which are incorporated herein and form part of the specification, illustrate various embodiments.

FIG. 1 illustrates a network node communicating simultaneously with a first UE and a second UE.

FIG. 2 illustrates processing that occurs during a time slot.

FIG. 3 illustrates processing, according to one embodiment, that occurs during first and second time slots.

FIG. 4 is a flow chart illustrating a process according to one embodiment.

FIG. 5 is a flow chart illustrating a process according to one embodiment.

FIG. 6 is a flow chart illustrating a process according to one embodiment.

FIG. 7 is a flow chart illustrating a process according to one embodiment.

FIG. 8 is a block diagram of a network node according to one embodiment.

FIG. 9A is a diagram showing functional units of a network node according to an embodiment.

FIG. 9B is a diagram showing functional units of a network node according to an embodiment.

FIG. 10 is a block diagram of a UE according to one embodiment.

FIG. 11A is a diagram showing functional units of a UE according to one embodiment.

FIG. 11B is a diagram showing functional units of a UE according to one embodiment.

FIG. 12 schematically illustrates a telecommunication network connected via an intermediate network to a host computer.

FIG. 13 is a generalized block diagram of a host computer communicating via a base station with a user equipment over a partially wireless connection.

FIG. 14 is a flowchart illustrating a method implemented in a communication system including a host computer, a base station and a user equipment.

FIG. 15 is a flowchart illustrating a method implemented in a communication system including a host computer, a base station and a user equipment.

FIG. 16 is a flowchart illustrating a method implemented in a communication system including a host computer, a base station and a user equipment.

FIG. 17 is a flowchart illustrating a method implemented in a communication system including a host computer, a base station and a user equipment

DETAILED DESCRIPTION

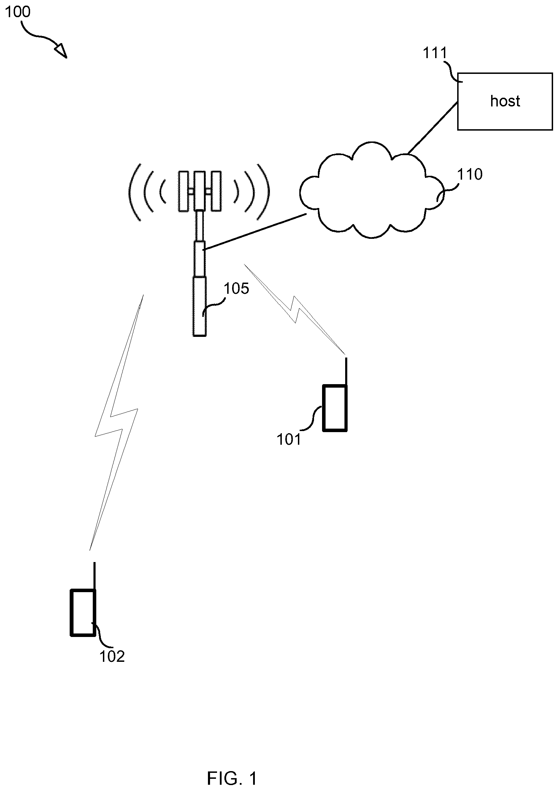

FIG. 1 illustrates a network 100 having a network node (NN) 105 (e.g., a system comprising a 4G or 5G base station or other access point) serving two UEs: UE 101 and UE 102. The two UEs have different channel (or "link") qualities. In this scenario, UE 102 is a "weak" UE (e.g., a cell-edge UE) and UE 101 is a "strong" UE (e.g. a cell-center UE).
With respect to uplink OMA transmissions, the UE 101's and UE 102's signals are transmitted in orthogonal resources, for instance at the same time but in different frequency bands, and NN 105 decodes the two transmitted signals separately. With respect to downlink OMA transmissions, NN 105 transmits for UE 101 a first signal using for example a first frequency band and transmits for UE 102 a second signal using for example a second frequency band that does not overlap with the first frequency band.
With respect to uplink NOMA, on the other hand, the UEs share the same frequency (or "spectrum"), time resources, and code or spreading resources, if any, to send their messages simultaneously. That is, NN 105 receives a superimposed signal containing the message transmitted by UE 101 and the message transmitted by UE 102. In such a NOMA scenario, NN 105, using for example a SIC receiver, first decodes the message of UE 101 (the "strong" UE), considering the message of UE 102 as noise. Then, after successfully decoding UE 101's message, NN 105 subtracts UE 101's message from the received signal and decodes UE 102's signal with no interference from UE 101.

Likewise, with respect to downlink NOMA, UE 101 and UE 102 are served by NN 105 in common radio resources, i.e., time-frequency chunks, as well as common code and/or beam resources, if applicable. We shall consider a frequency slot so that the time-frequency chunks refer to different time slots. Then, with no loss of generality, suppose that UE 101 experiences a better channel quality compared to UE 102 (i.e., UE 101 is the strong UE and UE 102 is the weak UE). That is, we have $|h_2| \le |h_1|$, where hi represents the channel coefficient of the NN 105 - UE 101 link and $h_2$ represents the channel coefficient of the NN-UE link. We define the channel gains as gi = $|h_i|^2$, i=1,2.

Using NOMA, in time slot t NN 105 generates and transmits a superimposed signal

$$S(t) = \sqrt{P_1}M_1(t) + \sqrt{P_2}M_2(t)$$ to both UEs in the same resources. Here, $M_1(t)$ and $M_2(t)$ are the unit-variance messages for UE 101 and UE 102, respectively, and $P_i$, i = 1, 2, are their corresponding transmit powers with $P_1 + P_2$ = P where P is the NN total power. In this way, the signal received by UE 101 (i.e., Yi(t)) and the signal received by UE 102 (i.e., $Y_2(t)$) is given by:

$$Y_i(t) = h_i\left(\sqrt{P_1}M_1(t) + \sqrt{P_2}M_2(t)\right) + Z_i(t), i = 1, 2, \tag{1}$$

where
$Z_i(t)$ denotes a noise signal (e.g., Gaussian white noise).

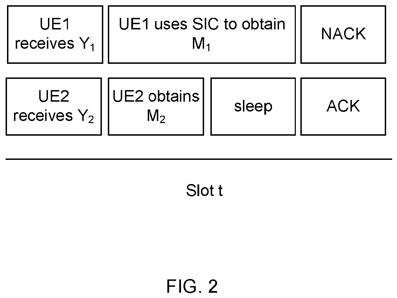

In the above scenario, which is illustrated in FIG. 2, UE 101 uses a SIC receiver to first decode-and-remove the message for UE 102 (i.e., $M_2$) and then obtain its own message ($M_1$) with no interference. The UE with the worse channel quality, i.e., UE 102 uses typical decoders to decode its own message in the presence of interference of the signal for UE 101.

The goal of each UE is to decode its own message, although they may decode the message of the other UE to reduce the interference. With conventional NOMA, UE 102 considers the signal for UE 101 as interference and uses OMA-based receivers to decode its own message. This is because it can be theoretically shown that there is no chance that UE 102 can first decode-and-remove the message of UE 101 (and then, decode its own message interference-free). UE 101, on the other hand, uses a SIC receiver to first decode-and-remove the message of UE 102 and then decode its own message interference-free.

Compared to conventional OMA-based receivers, SIC is a high-complexity scheme. Also, because the desired signal is decoded in two steps, SIC implies larger decoding delay which affects, e.g., the HARQ feedback process and, thereby, may increase the end-to-end transmission delay for both UEs in the situations where UE 102's signal should be synchronized with the signal of the UE 101 (different methods can be applied to synchronize the signals - for instance, some sleeping period may be considered by UE 102 (as illustrated in FIG. 2) or NN 105 may synchronize the signals of the UEs). Finally, with SIC, there is a probability of error propagation. This is because, if the message of UE 102 is not correctly decoded in the first step, the interference is not removed which reduces the probability that the cell-center can successfully decode its own message.

With this setup, the achievable rate for UE 101 (i.e., $R_1$) and the achievable rate for UE 102 (i.e., $R_2$) is given by:

$$\begin{cases} R_1 = log_2(1 + P_1 g_1), \\ R_2 = log_2\left(1 + \dfrac{P_2 g_2}{1 + P_1 g_2}\right). \end{cases} \tag{2}$$

Due to the interference signal of UE 101, UE 102 experiences a low channel quality and may need retransmissions to decode its messages.

Depending on the channels quality, there is a probability that UE 101 can not decode-and-remove the message for UE 102. In this case, the error propagates, and the additional interference increases the probability that UE101 can not decode its own message correctly.

In this way, compared to OMA-based systems, there may be a higher probability that the UEs need retransmissions for successful message decoding. However, HARQ-based retransmissions reduce the network throughput, which is the main winning point of NOMA compared to OMA. Thus, to implement an efficient NOMA-based setup, it would be useful to reduce retransmissions.

Assume that UE 101 (denoted "UE1") has been able to decode none of the messages that are intended for U1 and UE 102 (denoted "UE2"), and UE2 cannot decode its own message. However, similar approach is applicable if UE1 can decode the message of UE2 but none of the UEs can decode their own messages.

In a conventional system, with no successful message decoding at the UEs, both of their signals should be retransmitted by NN 105. Proposed herein is that NN 105 delays the message retransmission of UE1 while UE1 buffers the undecoded signal. That is, if none of the UEs have been able to decode the messages correctly, NN 105 retransmits the message for UE2 while sending a new messages for UE1. Then, buffering the undecoded message, in the next time slot UE1 utilizes the signal retransmitted for UE2 to decode and remove the interference. If it is successful to remove the interference, it retries to decode its own message. This is because the removed interference improves the quality of the received useful signal and, as a result, UE1 has a better chance to decode its own signal with no retransmissions. In other words, typical non-NOMA systems utilize the retransmissions to improve the power of the useful signal. With NOMA, however, one can use the retransmitted message of the other UE to reduce the interference power, which improves the received signal-to-interference-and noise ratio (SINR).

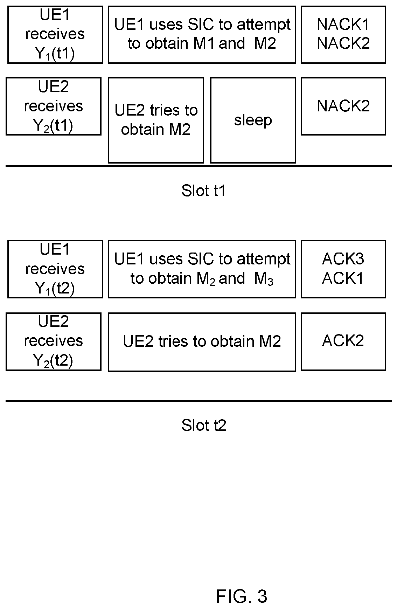

FIG. 3 illustrates an embodiment. In this embodiment, in time slot t1 NN 105 transmits a first superimposed signal containing a message for UE1 (i.e., M1) and a message for UE2 (i.e., M2). Accordingly, in slot t1, UE1 receives Y1(t1), which contains M1 and M2, and UE2 receives Y2(t1), which also contains M1 and M2. Assume that in time slot t1, using a SIC-based decoder, UE1 cannot decode M1 or M2 and buffers the signal that it received (i.e., Y1(t1)), and using a non-SIC-based decoder UE2 cannot decode M2 and buffers the signal that it received (i.e., Y2(t1)). Hence, as shown in FIG. 3, UE1 informs NN 105 that it could not obtain either M1 or M2 (e.g., UE1 sends two NACKs to NN 105), and UE2 informs NN 105 that it could not obtain M2 (e.g. UE2 sends a NACK to NN 105).

Subsequently, in time slot t2, NN 105 retransmits M2 but sends a new message M3 for UE1. That is, in slot t2, NN 105 transmits a second superimposed signal containing M2 and M3, but not containing M1. Accordingly, in slot t2, UE1 receives Y1(t2), which contains M3 and M2, and UE2 receives Y2(t2), which also contains M3 and M2.

Then, using the SIC-based decoding approach, UE1 tries to decode and remove M2 using its two received copies of this signal. If UE1 decodes M2 correctly, it has the chance to decode M1 and M3 with no retransmission of M1. Assuming that UE1 is able to obtain M1 and M3 in time slot t2, UE1 informs NN 105 (e.g., as shown in FIG. 3, UE1 transmits two ACKs to NN 105, one for each message). Assuming that UE1 is still unable to obtain M1, NN 105 may retransmit M1 when a) retransmission of M2 stops (either because U2 has decoded M2 correctly or the maximum number of retransmission rounds is reached) or b) UE1 is able to decode M2 but is not able to decode M1. Accordingly, for this embodiment, in each time slot: 1) UE1 attempts to decode all different, buffered and recently received, signals, 2) UE1 sends acknowledgement/negative acknowledgement (ACK/NACK) feedbacks for all messages it tries to decode and 3) NN 105 informs the UEs if it is retransmitting a specific signal (or the UEs are informed by other means).

In summary, the following signaling procedure may be applied by NN 105 and UE1. In each time slot, UE1 tries to decode all recently received and undecoded-and-buffered signals. Then, it sends separate ACK/NACK signals to inform NN 105 about the message decoding status of each signal. Depending on the messages decoding status, NN 105 may delay the retransmission of the signals for UE1. Also, if it retransmits a signal, it informs the UEs about the index of the message which is retransmitted.

In the above example, UE1 cannot decode either M1 or M2 and UE2 cannot decode M2. A similar approach is applicable if UE1 can decode M2 but not M1 and UE2 cannot decode M2. In this scenario, NN 105 delays the retransmission of M2 while it retransmits M1. Then, utilizing the two copies of the interference signal, UE2 has the chance to decode and remove the interference signal of UE1, which gives UE2 the chance to decode its own message (M2) interference-free and with no need for retransmissions.

As the above demonstrates, an advantage provided by the above embodiments is that they reduce the decoding complexity at the UEs and increase throughput because there is a chance that the UEs decode the undecoded messages with no need for retransmissions.

Also, the above described embodiments illustrate the DL NOMA transmission scenario, but the same approach is applicable for UL NOMA transmissions. With respect to UL NOMA transmission (i.e., wherein UE1 transmits a message (M1) using radio resources and UE2 transmits a message (M2) using the same radio resources and NN 105 uses a SIC-based decoding approach to obtain M1 and M2), if NN 105 fails to decode both messages, it first asks one of the UEs for a retransmission, while the other UE sends a new message (M3). For example, NN 105 instructs UE1 to retransmit M1 and instructs UE2 to transmit M3 using the same radio resources. Then, again using the SIC-based decoding approach, NN 105 tries to decode the retransmitted message M1, and if NN 105 is successful in obtaining M1, NN 105 will have a chance to of decoding M2 from the first received signal with no need for retransmission of M2.

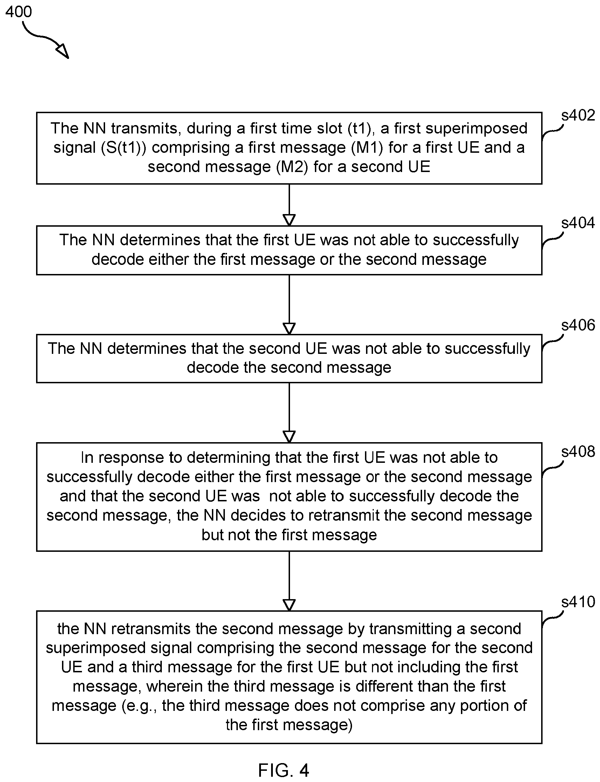

FIG. 4 is a flow chart illustrating a process 400, according to an embodiment, that is performed by NN 105. Process 400 may begin in step s402.

In step s402, NN 105 transmits, during a first time slot (t1), a first superimposed signal (S(t1)) comprising a first message (M1) for a first UE (e.g., UE 101 or UE 102) and a second message (M2) for a second UE (e.g., UE 101 or UE 102).

In step s404, NN 105 determines that the first UE was not able to successfully decode either the first message or the second message.

In step s406, NN 105 determines that the second UE was not able to successfully decode the second message;

In step s408, in response to determining that the first UE was not able to successfully decode either the first message or the second message and that the second UE was not able to successfully decode the second message, NN 105 decides to retransmit the second message but not the first message.

In step s410, NN 105 retransmits the second message by transmitting a second superimposed signal comprising the second message for the second UE and a third message for the first UE but not including the first message, wherein the third message is different than the first message (e.g., the third message does not comprise any portion of the first message).

In some embodiments, prior to transmitting the first superimposed signal comprising M1 and M2, NN 105 obtains (receives, generates or otherwise obtains) M1 and M2 and then generates the first superimposed signal (S1) (i.e., S1 = M1 + M2). For instance, NN 105 may receive M1 from a first host computer 111 (see FIG. 1) and may receive M2 from the first host computer or a second host computer (not shown).

In some embodiments, process 400 further includes, after transmitting the second superimposed signal and without any retransmission of the first message, NN 105 receives a positive acknowledgement (ACK) transmitted by the first UE, the ACK indicating that the first UE has successfully decoded the first message.

In some embodiments, process 400 further includes, after retransmitting the second message, determining that the first UE is still unable to decode the first message, but the second UE has successfully decoded the second message; and as a result of determining that the first UE is still unable to decode the first message, but the second UE has successfully decoded the second message, retransmitting the first message.

In some embodiments, process 400 further includes, after deciding to retransmit the second message but not the first message, informing the first UE that the second messing is being retransmitted.

In some embodiments, NN 105 determines that the first UE was not able to successfully decode either the first message or the second message by receiving a NACK corresponding to the first message and a second NACK corresponding to the second message, the first NACK indicating that the first UE was not able to successfully decode the first message, and the second NACK indicating that the first UE was not able to successfully decode the second message.

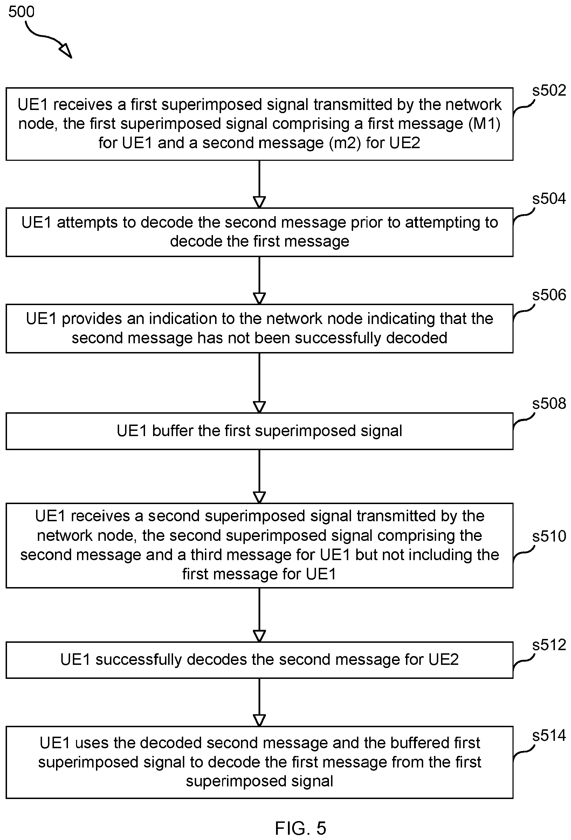

FIG. 5 is a flow chart illustrating a process 500, according to an embodiment, that is performed by UE1. Process 500 may begin in step s502.

In step s502, UE1 receives a first superimposed signal transmitted by the network node, the first superimposed signal comprising a first message (M1) for UE1 and a second message (m2) for UE2.

In step s504, UE1 attempts to decode the second message prior to attempting to decode the first message.

In step s506, UE1, after attempting to decode the second message, UE1 provides an indication to the network node indicating that the second message has not been successfully decoded.

In step s508, UE1 buffer the first superimposed signal.

In step s510, after providing the indication to the network node, UE1 receives a second superimposed signal transmitted by the network node, the second superimposed signal comprising the second message and a third message for UE1 but not including the first message for UE1, wherein the third message is different than the first message.

In step s512, after receiving the second superimposed signal, UE1 successfully decodes the second message for UE2.

In step s514, after successfully decoding the second message for UE2, UE1 uses the decoded second message and the buffered first superimposed signal to decode the first message from the first superimposed signal.

In some embodiments, process 500 further includes, after receiving the second superimposed signal and without receiving any retransmission of the first message, UE1 transmits a positive acknowledgement, ACK, the ACK indicating that UE1 has successfully decoded the first message.

In some embodiments, process 500 further includes, UE1 receiving information transmitted by the network node, the information indicating that the second messing is being retransmitted together with the third message.

In some embodiments, providing the indication to the network node comprises UE1 transmitting a negative acknowledgement, NACK, indicating that it was not able to successfully decode the second message.

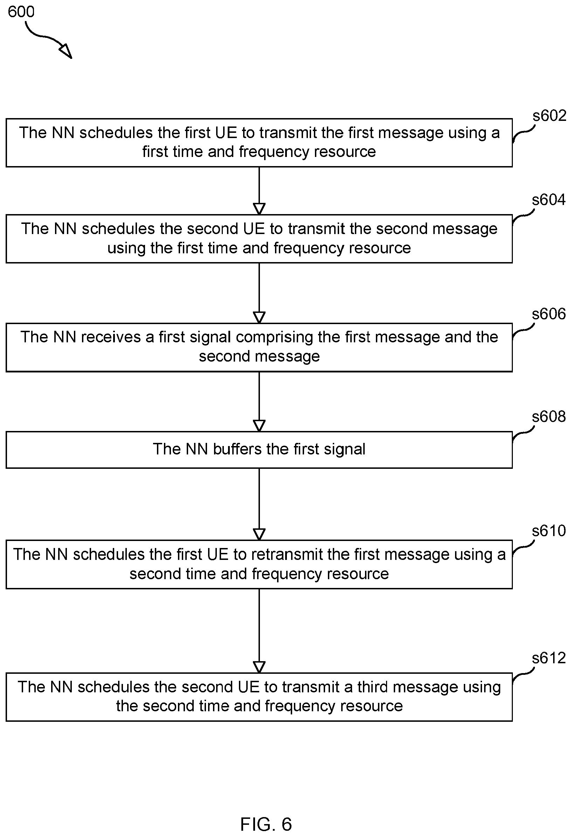

FIG. 6 is a flow chart illustrating a process 600, according to an embodiment, that is performed by NN 105 for obtaining a first message (M1) transmitted by a first UE (e.g., UE1) and a second message (M2) transmitted by a second UE (e.g, UE2). Process 600 may begin in step s602.

In step s602, NN 105 schedules the first UE to transmit the first message using a first time and frequency resource.

In step s604, NN 105 schedules the second UE to transmit the second message using the first time and frequency resource.

In step s606, NN 105 receives a first signal comprising the first message and the second message.

As a result of not being able to obtain either the first message or the second message from the first signal, NN 105 performs steps comprising: buffering the first signal (step s608); scheduling the first UE to retransmit the first message using a second time and frequency resource (step s610); and scheduling the second UE to transmit a third message using the second time and frequency resource (step s612), wherein the third message is different than the second message.

In some embodiments, process 600 also includes NN 105 performing steps comprising: receiving a second signal comprising the first message and the third message; obtaining the first message from the second signal; obtaining the third message from the second signal; and using the first message obtained from the second signal and the buffered first signal, obtaining the second message from the first signal. In some embodiments, obtaining the second message from the first signal comprises: removing the first message from the first signal, thereby producing a residual signal comprising the second message; and obtaining the second message from the residual signal.

In some embodiments, process 600 also includes NN 105 receiving a second signal comprising the first message and the third message; and, as a result of not being able to obtain either the first message or the third message from the second signal, performing steps comprising: buffering the second signal; scheduling the first UE to retransmit the first message using a third time and frequency resource; and scheduling the second UE to transmit a fourth message using the second time and frequency resource, wherein the fourth message is different than the second and third message.

In some embodiments, scheduling the second UE to transmit a third message comprises transmitting to the second UE a scheduling message (e.g., a Downlink Control Information (DCI) message) comprising information for causing the second UE to buffer the second message in case the second UE needs to retransmit the second message.

In some embodiments, after successfully obtaining the first message (M1) and the second message (M2), NN 105 may forward M1 towards a first host computer 111 and may forward M2 towards a second host computer (or the first host computer 111).

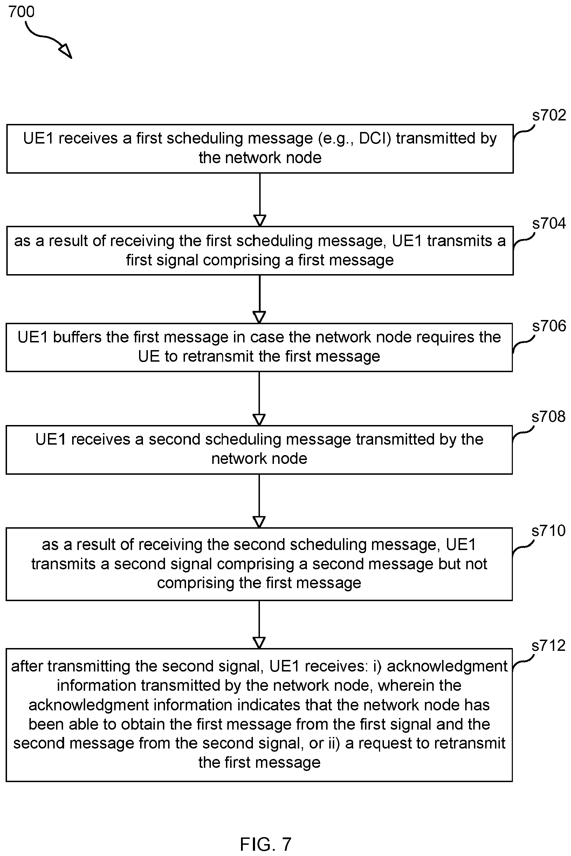

FIG. 7 is a flow chart illustrating a process 700, according to an embodiment, that is performed by UE1 for transmitting messages to a network node. Process 700 may begin in step s702.

In step s702, UE1 receives a first scheduling message (e.g., DCI) transmitted by the network node.

In step s704, as a result of receiving the first scheduling message, UE1 transmits a first signal comprising a first message.

In step s706, after transmitting the first signal, UE1 buffers the first message in case the network node requires the UE to retransmit the first message (e.g., stores the first message in a retransmit queue).

In step s708, after buffing the first message, UE1 receives a second scheduling message transmitted by the network node, the second scheduling message instructing the UE to transmit a second message.

In step s710, as a result of receiving the second scheduling message, UE1 transmits a second signal comprising the second message but not comprising the first message.

In step s712, after transmitting the second signal, UE1 receives: i) acknowledgment information transmitted by the network node, wherein the acknowledgment information indicates that the network node has been able to obtain the first message from the first signal and the second message from the second signal, or ii) a request to retransmit the first message.

In response to receiving the acknowledgment information indicating that the network node has been able to obtain the first message from the first signal and the second message from the second signal, UE1 de-buffers the first message (e.g., removes the first message from the retransmit queue).

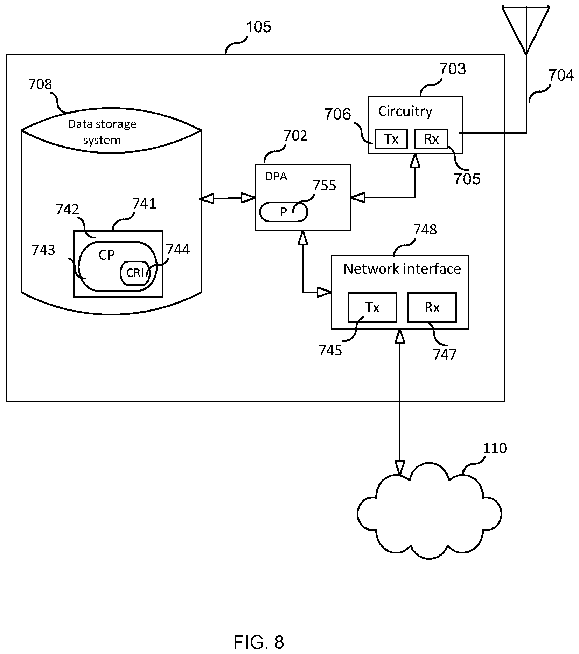

FIG. 8 is a block diagram of network node 150, according to some embodiments for performing methods disclosed herein. As shown in FIG. 8, network node 150 may comprise: processing circuitry (PC) 802, which may include one or more processors (P) 855 (e.g., a general purpose microprocessor and/or one or more other processors, such as an application specific integrated circuit (ASIC), field-programmable gate arrays (FPGAs), and the like), which processors may be co-located or distributed in different locations; a network interface 848 comprising a transmitter (Tx) 845 and a receiver (Rx) 847 for enabling network node 150 to transmit data to and receive data from other nodes connected to a network 110 (e.g., an Internet Protocol (IP) network) to which network interface 848 is connected; circuitry 803 (e.g., radio transceiver circuitry comprising an Rx 805 and a Tx 806) coupled to an antenna system 804 for wireless communication with UEs); and a local storage unit (a.k.a., "data storage system") 808, which may include one or more non-volatile storage devices and/or one or more volatile storage devices. In embodiments where PC 802 includes a programmable processor, a computer program product (CPP) 841 may be provided. CPP 841 includes a computer readable medium (CRM) 842 storing a computer program (CP) 843 comprising computer readable instructions (CRI) 844. CRM 842 may be a non-transitory computer readable medium, such as, magnetic media (e.g., a hard disk), optical media, memory devices (e.g., random access memory, flash memory), and the like. In some embodiments, the CRI 844 of computer program 843 is configured such that when executed by PC 802, the CRI causes network node 150 to perform steps described herein (e.g., steps described herein with reference to the flow charts). In other embodiments, network node 150 may be configured to perform steps described herein without the need for code. That is, for example, PC 802 may consist merely of one or more ASICs. Hence, the features of the embodiments described herein may be implemented in hardware and/or software.

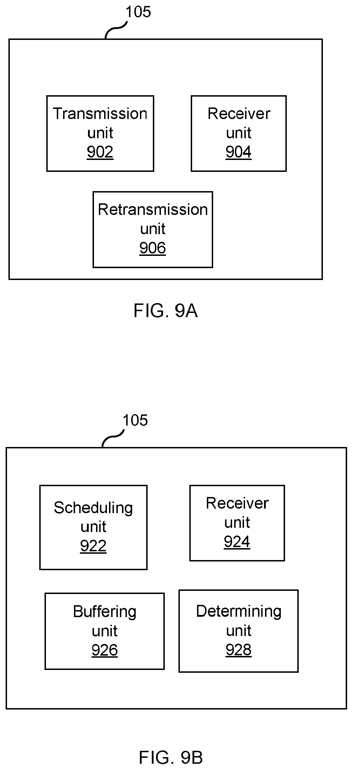

FIG. 9A is a diagram showing functional units of network node 105 according to an embodiment. In the embodiment shown, network node 105 includes: a transmission unit 902 for employing a transmitter to transmit a first superimposed signal comprising a first message for UE1 and a second message for UE2; and a receiver unit 904 for employing a receiver to i) obtain a message transmitted by UE1 indicating that UE1 was unable to decode the first message for UE1 and the second message for UE2 and ii) obtain a message transmitted by UE2 indicating that UE2 was unable to decode the second message; and a retransmitting unit 906 for delaying the retransmission of the first message, but not delaying the retransmission of the second message by transmitting a second superimposed signal comprising a third message for UE1 and the second message for UE2.

FIG. 9B is a diagram showing functional units of network node 105 according to an embodiment. In the embodiment shown, network node 105 includes: a scheduling unit 922 for scheduling a first UE to transmit a first message using a first time and frequency resource and scheduling a second UE to transmit a second message using the first time and frequency resource; a receiver unit 924 configured to receive via a receiver a first signal comprising the first message and the second message; a buffering unit 926; and a determining unit 930. The determining unit 930 is operable to determine whether the NN 105 is able to obtain either the first message or the second message from the first signal. As a result of the determining unit 930 determining that NN 105 is not able to obtain either the first message or the second message from the first signal, the buffering unit 926 buffers the first signal and the scheduling unit 922 schedules the first UE to retransmit the first message using a second time and frequency resource and schedules the second UE to transmit a third message using the second time and frequency resource, wherein the third message is different than the second message.

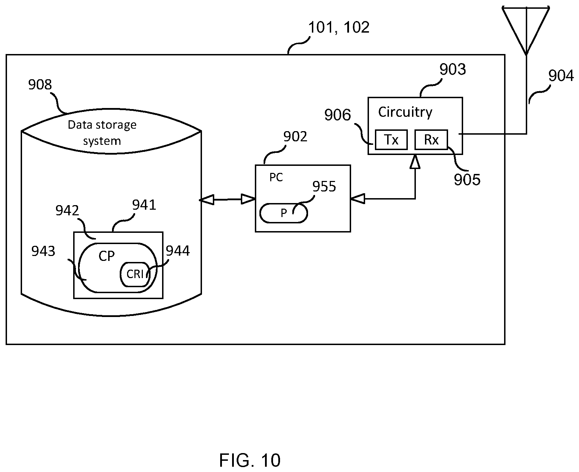

FIG. 10 is a block diagram of a UE (e.g. UE 101 or UE 102), according to some embodiments. As shown in FIG. 10, the UE may comprise: processing circuitry (PC) 1002, which may include one or more processors (P) 1055 (e.g., a general purpose microprocessor and/or one or more other processors, such as an application specific integrated circuit (ASIC), field-programmable gate arrays (FPGAs), and the like); circuitry 1003 (e.g., radio transceiver circuitry comprising an Rx 1005 and a Tx 1006) coupled to an antenna system 1004 for wireless communication); and a local storage unit (a.k.a., "data storage system") 1008, which may include one or more non-volatile storage devices and/or one or more volatile storage devices. In embodiments where PC 1002 includes a programmable processor, a computer program product (CPP) 1041 may be provided. CPP 1041 includes a computer readable medium (CRM) 1042 storing a computer program (CP) 1043 comprising computer readable instructions (CRI) 1044. CRM 1042 may be a non-transitory computer readable medium, such as, magnetic media (e.g., a hard disk), optical media, memory devices (e.g., random access memory, flash memory), and the like. In some embodiments, the CRI 1044 of computer program 1043 is configured such that when executed by PC 1002, the CRI causes the UE to perform steps described herein (e.g., steps described herein with reference to the flow charts). In other embodiments, the UE may be configured to perform steps described herein without the need for code. That is, for example, PC 1002 may consist merely of one or more ASICs. Hence, the features of the embodiments described herein may be implemented in hardware and/or software.

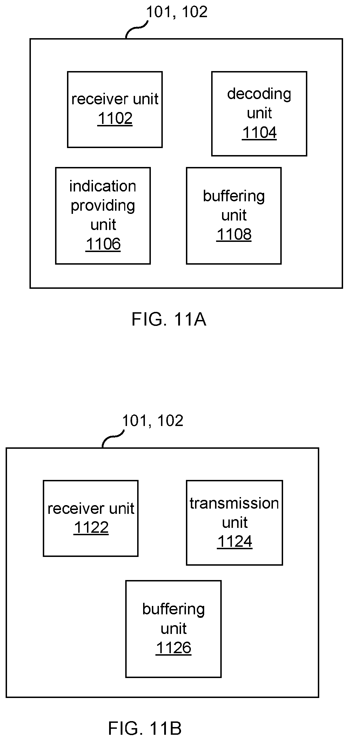

FIG. 11A is a diagram showing functional units of a UE (e.g., UE 101 or UE 102) according to an embodiment. In the embodiment shown, the UE includes: a receiver unit 1102 for employing a receiver to receive a first superimposed signal transmitted by the network node, the first superimposed signal comprising a first message for the first UE and a second message for the second UE; a decoding unit 1104 for attempting to decode the second message from the first superimposed signal prior to attempting to decode the first message for the first UE; an indication providing unit 1106 for providing an indication to the network node indicating that the second message has not been successfully decoded; and a buffering unit 1108 for buffering the first superimposed signal. The receiver unit 1102 is further operable to employ the receiver to receive a second superimposed signal transmitted by the network node, the second superimposed signal comprising the second message for the second UE and a third message for the first UE but not including the first message for the first UE, wherein the third message is different than the first message. The decoding unit 1104 is further operable to decode the second message for the second UE and, after successfully decoding the second message for the second UE, use the decoded second message and the buffered first superimposed signal to decode the first message from the first superimposed signal.

FIG. 11B is a diagram showing functional units of a UE (e.g., UE 101 or UE 102) according to an embodiment. In the embodiment shown, the UE includes: a receiver unit 1122 for receiving a first scheduling message transmitted by a network node; a transmission unit 1124 for employing a transmitter to transmit a first signal comprising a first message as a result of the UE receiving the first scheduling message; and a buffering unit 1126 for buffering the first message, after transmitting the first signal, in case the network node requires the UE to retransmit the first message. The receiver unit 1122 is further operable to receive a second scheduling message transmitted by the network node, the second scheduling message instructing the UE to transmit a second message, and the transmission unit 1124 is further operable to, as a result of the UE receiving the second scheduling message, employ the transmitter to transmit a second signal comprising the second message but not comprising the first message. The receiver unit 1122 is further operable to receive i) acknowledgment information transmitted by the network node, wherein the acknowledgment information indicates that the network node has been able to obtain the first message from the first signal and the second message from the second signal or ii) a request to retransmit the first message. The buffering unit 1126 is further configured such that, as a result of the UE receiving the acknowledgment information indicating that the network node has been able to obtain the first message from the first signal, the buffering unit 1126 de-buffers the first message.

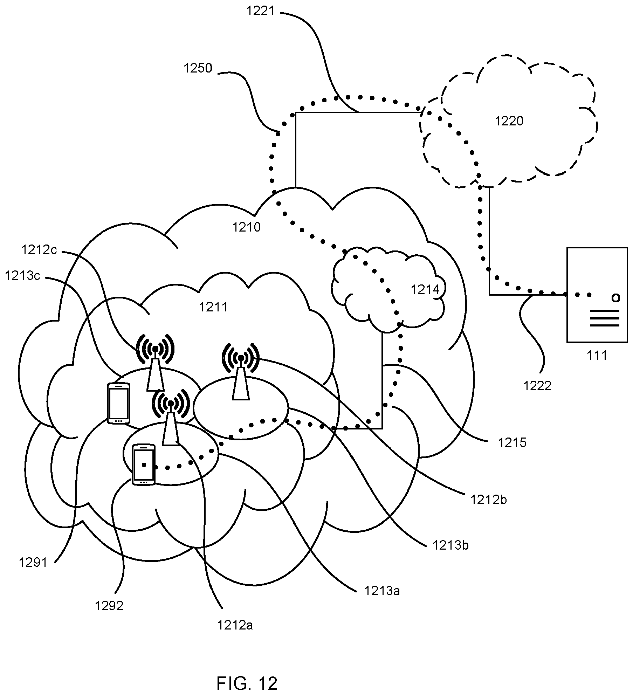

FIG. 12 illustrates a telecommunication network connected via an intermediate network to a host computer 111 in accordance with some embodiments. With reference to FIG. 12, in accordance with an embodiment, a communication system includes telecommunication network 1210, such as a 3GPP-type cellular network, which comprises access network 1211, such as a radio access network, and core network 1214. Access network 1211 comprises a plurality of APs (hereafter base stations) 1212a, 1212b, 1212c, such as NBs, eNBs, gNBs or other types of wireless access points, each defining a corresponding coverage area 1213a, 1213b, 1213c. Each base station 1212a, 1212b, 1212c is connectable to core network 1214 over a wired or wireless connection 1215. A first UE 1291 located in coverage area 1213c is configured to wirelessly connect to, or be paged by, the corresponding base station 1212c. A second UE 1292 in coverage area 1213a is wirelessly connectable to the corresponding base station 1212a. While a plurality of UEs 1291, 1292 are illustrated in this example, the disclosed embodiments are equally applicable to a situation where a sole UE is in the coverage area or where a sole UE is connecting to the corresponding base station 1212.

Telecommunication network 1210 is itself connected to host computer 111, which may be embodied in the hardware and/or software of a standalone server, a cloud-implemented server, a distributed server or as processing resources in a server farm. Host computer 111 may be under the ownership or control of a service provider, or may be operated by the service provider or on behalf of the service provider. Connections 1221 and 1222 between telecommunication network 1210 and host computer 111 may extend directly from core network 1214 to host computer 111 or may go via an optional intermediate network 1220. Intermediate network 1220 may be one of, or a combination of more than one of, a public, private or hosted network; intermediate network 1220, if any, may be a backbone network or the Internet; in particular, intermediate network 1220 may comprise two or more sub-networks (not shown).

The communication system of FIG. 12 as a whole enables connectivity between the connected UEs 1291, 1292 and host computer 111. The connectivity may be described as an over-the-top (OTT) connection 1250. Host computer 111 and the connected UEs 1291, 1292 are configured to communicate data and/or signaling via OTT connection 1250, using access network 1211, core network 1214, any intermediate network 1220 and possible further infrastructure (not shown) as intermediaries. OTT connection 1250 may be transparent in the sense that the participating communication devices through which OTT connection 1250 passes are unaware of routing of uplink and downlink communications. For example, base station 1212 may not or need not be informed about the past routing of an incoming downlink communication with data originating from host computer 111 to be forwarded (e.g., handed over) to a connected UE 1291. Similarly, base station 1212 need not be aware of the future routing of an outgoing uplink communication originating from the UE 1291 towards the host computer 111.

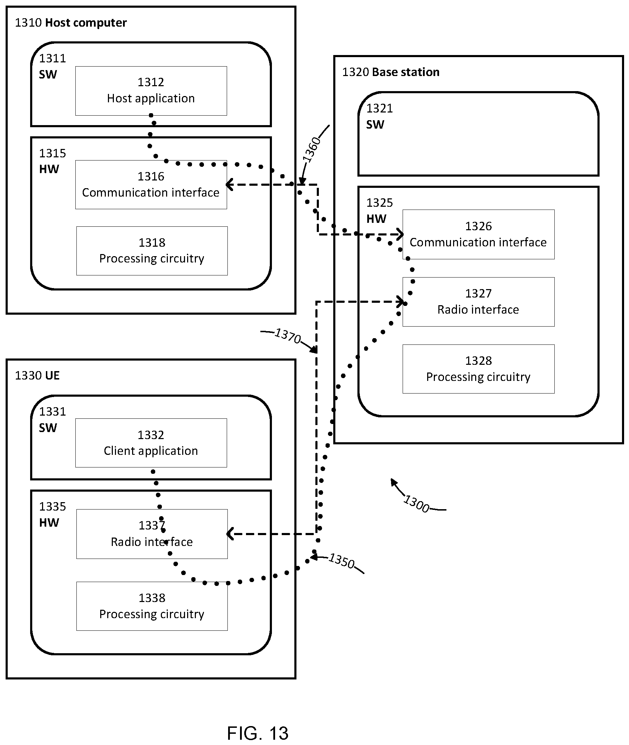

Example implementations, in accordance with an embodiment, of the UE, base station and host computer discussed in the preceding paragraphs will now be described with reference to FIG. 13, which illustrates a host computer communicating via a base station with a user equipment over a partially wireless connection in accordance with some embodiments. In communication system 1300, host computer 1310 comprises hardware 1315 including communication interface 1316 configured to set up and maintain a wired or wireless connection with an interface of a different communication device of communication system 1300. Host computer 1310 further comprises processing circuitry 1318, which may have storage and/or processing capabilities. In particular, processing circuitry 1318 may comprise one or more programmable processors, application-specific integrated circuits, field programmable gate arrays or combinations of these (not shown) adapted to execute instructions. Host computer 1310 further comprises software 1311, which is stored in or accessible by host computer 1310 and executable by processing circuitry 1318. Software 1311 includes host application 1312. Host application 1312 may be operable to provide a service to a remote user, such as UE 1330 connecting via OTT connection 1350 terminating at UE 1330 and host computer 1310. In providing the service to the remote user, host application 1312 may provide user data which is transmitted using OTT connection 1350.

Communication system 1300 further includes base station 1320 provided in a telecommunication system and comprising hardware 1325 enabling it to communicate with host computer 1310 and with UE 1330. Hardware 1325 may include communication interface 1326 for setting up and maintaining a wired or wireless connection with an interface of a different communication device of communication system 1300, as well as radio interface 1327 for setting up and maintaining at least wireless connection 1370 with UE 1330 located in a coverage area (not shown in FIG. 13) served by base station 1320. Communication interface 1326 may be configured to facilitate connection 1360 to host computer 1310. Connection 1360 may be direct or it may pass through a core network (not shown in FIG. 13) of the telecommunication system and/or through one or more intermediate networks outside the telecommunication system. In the embodiment shown, hardware 1325 of base station 1320 further includes processing circuitry 1328, which may comprise one or more programmable processors, application-specific integrated circuits, field programmable gate arrays or combinations of these (not shown) adapted to execute instructions. Base station 1320 further has software 1321 stored internally or accessible via an external connection.

Communication system 1300 further includes UE 1330 already referred to. Its hardware 1335 may include radio interface 1337 configured to set up and maintain wireless connection 1370 with a base station serving a coverage area in which UE 1330 is currently located. Hardware 1335 of UE 1330 further includes processing circuitry 1338, which may comprise one or more programmable processors, application-specific integrated circuits, field programmable gate arrays or combinations of these (not shown) adapted to execute instructions. UE 1330 further comprises software 1331, which is stored in or accessible by UE 1330 and executable by processing circuitry 1338. Software 1331 includes client application 1332. Client application 1332 may be operable to provide a service to a human or non-human user via UE 1330, with the support of host computer 1310. In host computer 1310, an executing host application 1312 may communicate with the executing client application 1332 via OTT connection 1350 terminating at UE 1330 and host computer 1310. In providing the service to the user, client application 1332 may receive request data from host application 1312 and provide user data in response to the request data. OTT connection 1350 may transfer both the request data and the user data. Client application 1332 may interact with the user to generate the user data that it provides.

It is noted that host computer 1310, base station 1320 and UE 1330 illustrated in FIG. 13 may be similar or identical to host computer 111, one of base stations 1212a, 1212b, 1212c and one of UEs 1291, 1292 of FIG. 12, respectively. This is to say, the inner workings of these entities may be as shown in FIG. 13 and independently, the surrounding network topology may be that of FIG. 12.

In FIG. 13, OTT connection 1350 has been drawn abstractly to illustrate the communication between host computer 1310 and UE 1330 via base station 1320, without explicit reference to any intermediary devices and the precise routing of messages via these devices. Network infrastructure may determine the routing, which it may be configured to hide from UE 1330 or from the service provider operating host computer 1310, or both. While OTT connection 1350 is active, the network infrastructure may further take decisions by which it dynamically changes the routing (e.g., on the basis of load balancing consideration or reconfiguration of the network).

Wireless connection 1370 between UE 1330 and base station 1320 is in accordance with the teachings of the embodiments described throughout this disclosure. One or more of the various embodiments improve the performance of OTT services provided to UE 1330 using OTT connection 1350, in which wireless connection 1370 forms the last segment. More precisely, the teachings of these embodiments may improve one or more of message throughput, SINR, latency, overhead, and power consumption and thereby provide benefits such as reduced user waiting time, better responsiveness, extended battery lifetime, etc.

A measurement procedure may be provided for the purpose of monitoring data rate, latency and other factors on which the one or more embodiments improve. There may further be an optional network functionality for reconfiguring OTT connection 1350 between host computer 1310 and UE 1330, in response to variations in the measurement results. The measurement procedure and/or the network functionality for reconfiguring OTT connection 1350 may be implemented in software 1311 and hardware 1315 of host computer 1310 or in software 1331 and hardware 1335 of UE 1330, or both. In embodiments, sensors (not shown) may be deployed in or in association with communication devices through which OTT connection 1350 passes; the sensors may participate in the measurement procedure by supplying values of the monitored quantities exemplified above, or supplying values of other physical quantities from which software 1311, 1331 may compute or estimate the monitored quantities. The reconfiguring of OTT connection 1350 may include message format, retransmission settings, preferred routing etc.; the reconfiguring need not affect base station 1320, and it may be unknown or imperceptible to base station 1320. Such procedures and functionalities may be known and practiced in the art. In certain embodiments, measurements may involve proprietary UE signaling facilitating host computer 1310's measurements of throughput, propagation times, latency and the like. The measurements may be implemented in that software 1311 and 1331 causes messages to be transmitted, in particular empty or 'dummy' messages, using OTT connection 1350 while it monitors propagation times, errors etc.

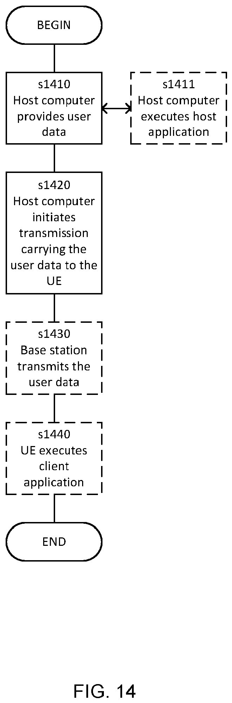

FIG. 14 is a flowchart illustrating a method implemented in a communication system, in accordance with one embodiment. The communication system includes a host computer, a base station and a UE which may be those described with reference to FIG. 12 and FIG. 13. In step S1410, the host computer provides user data. In substep S1411 (which may be optional) of step S1410, the host computer provides the user data by executing a host application. In step S1420, the host computer initiates a transmission carrying the user data to the UE. In step S1430 (which may be optional), the base station transmits to the UE the user data which was carried in the transmission that the host computer initiated, in accordance with the teachings of the embodiments described throughout this disclosure. In step S1440 (which may also be optional), the UE executes a client application associated with the host application executed by the host computer.

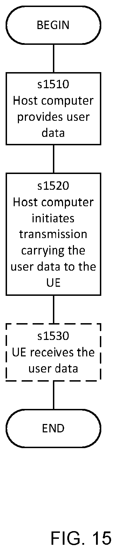

FIG. 15 is a flowchart illustrating a method implemented in a communication system, in accordance with one embodiment. The communication system includes a host computer, a base station and a UE which may be those described with reference to FIG. 12 and FIG. 13. For simplicity of the present disclosure, only drawing references to FIG. 15 will be included in this section. In step S1510 of the method, the host computer provides user data. In an optional substep (not shown) the host computer provides the user data by executing a host application. In step S1520, the host computer initiates a transmission carrying the user data to the UE. The transmission may pass via the base station, in accordance with the teachings of the embodiments described throughout this disclosure. In step S1530 (which may be optional), the UE receives the user data carried in the transmission.

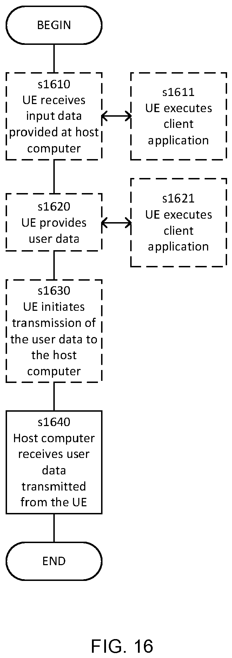

FIG. 16 is a flowchart illustrating a method implemented in a communication system, in accordance with one embodiment. The communication system includes a host computer, a base station and a UE which may be those described with reference to FIG. 12 and FIG. 13. For simplicity of the present disclosure, only drawing references to FIG. 16 will be included in this section. In step S1610 (which may be optional), the UE receives input data provided by the host computer. Additionally or alternatively, in step S1620, the UE provides user data. In substep S1621 (which may be optional) of step S1620, the UE provides the user data by executing a client application. In substep S1611 (which may be optional) of step S1610, the UE executes a client application which provides the user data in reaction to the received input data provided by the host computer. In providing the user data, the executed client application may further consider user input received from the user. Regardless of the specific manner in which the user data was provided, the UE initiates, in substep S1630 (which may be optional), transmission of the user data to the host computer. In step S1640 of the method, the host computer receives the user data transmitted from the UE, in accordance with the teachings of the embodiments described throughout this disclosure.

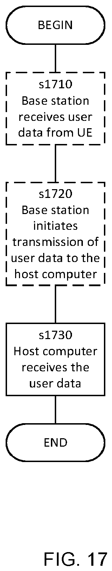

FIG. 17 is a flowchart illustrating a method implemented in a communication system, in accordance with one embodiment. The communication system includes a host computer, a base station and a UE which may be those described with reference to FIG. 12 and FIG. 13. For simplicity of the present disclosure, only drawing references to FIG. 17 will be included in this section. In step S1710 (which may be optional), in accordance with the teachings of the embodiments described throughout this disclosure, the base station receives user data from the UE. In step S1720 (which may be optional), the base station initiates transmission of the received user data to the host computer. In step S1730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While various embodiments are described herein, it should be understood that they have been presented by way of example only, and not limitation. Thus, the breadth and scope of this disclosure should not be limited by any of the above-described exemplary embodiments.

Additionally, while the processes described above and illustrated in the drawings are shown as a sequence of steps, this was done solely for the sake of illustration.

## Claims

1.  A method (400) for transmitting messages to a first user equipment, UE (101), and a second UE (102), the method being performed by a network node (105) and comprising:

    transmitting (s402) first superimposed signal comprising a first message for the first UE and a second message for the second UE; and
    determining (s406) that the second UE was not able to successfully decode the second message,
    the method further comprises

    determining (s404) that the first UE was not able to successfully decode either the first message or the second message;
    in response to determining that the first UE was not able to successfully decode either the first message or second message and that the second UE was not able to successfully decode the second message, deciding (s408) to retransmit the second message but not the first message; and
    retransmitting (s410) the second message by transmitting a second superimposed signal comprising the second message for the second UE and a third message for the first UE but not including the first message, wherein the third message is different than the first message, wherein
    the method is **characterised by** determining that the first UE was not able to successfully decode either the first message or the second message comprises receiving a first negative acknowledgment, NACK, corresponding to the first message and a second NACK corresponding to the second message, the first NACK indicating that the first UE was not able to successfully decode the first message, and the second NACK indicating that the first UE was not able to successfully decode the second message.

2. The method of claim 1, further comprising, after transmitting the second superimposed signal and without any retransmission of the first message, receiving a positive acknowledgement, ACK, transmitted by the first UE, the ACK indicating that the first UE has successfully decoded the first message.

3. The method of claim 1, further comprising:

after retransmitting the second message, determining that the first UE is still unable to decode the first message, but the second UE has successfully decoded the second message; and
as a result of determining that the first UE is still unable to decode the first message, but the second UE has successfully decoded the second message, retransmitting the first message.

4. The method of any one of claims 1-3, further comprising, after deciding to retransmit the second message but not the first message, informing the first UE that the second messing is being retransmitted.

5. The method of any one of claims 1-4, wherein the third message does not comprise any portion of the first message.

6. A method (500) performed by a first user equipment, UE (101), for receiving messages transmitted by a network node, the method comprising:

the first UE receiving (s502) a first superimposed signal transmitted by the network node, the first superimposed signal comprising a first message for the first UE and a second message for a second UE;
the first UE attempting (s504) to decode the second message for the second UE prior to attempting to decode the first message for the first UE;
after attempting to decode the second message, the first UE providing (s506) an indication to the network node indicating that the second message has not been successfully decoded;
the first UE buffering (s508) the first superimposed signal;
after providing the indication to the network node, the first UE receiving (s510) a second superimposed signal transmitted by the network node, the second superimposed signal comprising the second message for the second UE and a third message for the first UE but not including the first message for the first UE, wherein the third message is different than the first message;
after receiving the second superimposed signal, the first UE successfully decoding (s512) the second message for the second UE;
after successfully decoding the second message for the second UE, the first UE using (s514) the decoded second message and the buffered first superimposed signal to decode the first message from the first superimposed signal, **characterized in that**
providing the indication to the network node comprises the first UE transmitting a negative acknowledgement, NACK, indicating that the first UE was not able to successfully decode the second message.

7. The method of claim 6, further comprising, after receiving the second superimposed signal and without receiving any retransmission of the first message, transmitting a positive acknowledgement, ACK, the ACK indicating that the first UE has successfully decoded the first message.

8. The method of any one of claims 6-7, further comprising receiving information transmitted by the network node, the information indicating that the second messing is being retransmitted.

9. The method of any one of claims 6-8, wherein the third message does not comprise any portion of the first message.

10. A computer program (743, 943) comprising instructions (744, 944) which, when executed by processing circuitry (755, 955), causes the processing circuitry to carry out the method of any one of claims 1-9.

11. A carrier containing the computer program of claim 10, wherein the carrier is one of an electronic signal, an optical signal, a radio signal, and a computer readable storage medium (742, 942).

12. A network node (105), the network node comprising:

a transmission unit (902) for employing a transmitter to transmit a first superimposed signal comprising a first message for a first UE, UE1, and a second message for a second UE, UE2;
a receiver unit (904) for employing a receiver to i) obtain a message transmitted by UE1 indicating that UE1 was unable to decode the first message for UE1 and the second message for UE2 and ii) obtain a message transmitted by UE2 indicating that UE2 was unable to decode the second message; and

a retransmitting unit (906) for delaying the retransmission of the first message, but not delaying the retransmission of the second message by employing the transmitter to transmit a second superimposed signal comprising a third message for UE1 and the second message for UE2, **characterized in that**

the message transmitted by UE1 indicating that UE1 was unable to decode the first message for UE1 and the second message for UE2 comprises a first negative acknowledgment, NACK, corresponding to the first message and a second NACK corresponding to the second message.

**13.** A first user equipment (101, 102), the first user equipment, UE1, comprising:

a receiver unit (1102) for employing a receiver to receive a first superimposed signal transmitted by a network node, the first superimposed signal comprising a first message for the first UE and a second message for a second UE;

a decoding unit (1104) for attempting to decode the second message from the first superimposed signal prior to attempting to decode the first message for the first UE;

an indication providing unit (1106) for providing an indication to the network node indicating that the second message has not been successfully decoded; and

a buffering unit (1108) for buffering the first superimposed signal, wherein

the receiver unit (1102) is further operable to employ the receiver to receive a second superimposed signal transmitted by the network node, the second superimposed signal comprising the second message for the second UE and a third message for the first UE but not including the first message for the first UE, wherein the third message is different than the first message, and

the decoding unit (1104) is further operable to decode the second message for the second UE and, after successfully decoding the second message for the second UE, use the decoded second message and the buffered first superimposed signal to decode the first message from the first superimposed signal, **characterized in that**

the indication providing unit is configured to provide the indication to the network node by transmitting a negative acknowledgement, NACK, indicating that the first UE was not able to successfully decode the second message.

**Patentansprüche**

**1.** Verfahren (400) zum Übertragen von Nachrichten an eine erste Benutzerausrüstung, UE (101), und eine zweite UE (102), wobei das Verfahren von einem Netzwerkknoten (105) durchgeführt wird und Folgendes umfasst:

Übertragen (s402) eines ersten überlagerten Signals, das eine erste Nachricht für die erste UE und eine zweite Nachricht für die zweite UE umfasst; und

Feststellung (s406), dass die zweite UE die zweite Nachricht nicht erfolgreich dekodieren konnte, wobei das Verfahren weiter umfasst:

Feststellung (s404), dass die erste UE weder die erste Nachricht noch die zweite Nachricht erfolgreich dekodieren konnte;

als Reaktion auf die Feststellung, dass die erste UE die erste Nachricht oder die zweite Nachricht nicht erfolgreich dekodieren konnte und dass die zweite UE die zweite Nachricht nicht erfolgreich dekodieren konnte, entscheiden (s408), die zweite Nachricht erneut zu übertragen, nicht aber die erste Nachricht; und

erneutes Übertragen (s410) der zweiten Nachricht durch Übertragen eines zweiten überlagerten Signals, das die zweite Nachricht für die zweite UE und eine dritte Nachricht für die erste UE umfasst, aber nicht die erste Nachricht enthält, wobei die dritte Nachricht sich von der ersten Nachricht unterscheidet, wobei

wobei das Verfahren **dadurch gekennzeichnet ist, dass** das Feststellen, dass die erste UE die erste Nachricht oder die zweite Nachricht nicht erfolgreich dekodieren konnte, das Empfangen einer ersten negativen Bestätigung, NACK, entsprechend der ersten Nachricht und einer zweiten NACK entsprechend der zweiten Nachricht umfasst, wobei die erste NACK anzeigt, dass die erste UE die erste Nachricht nicht erfolgreich dekodieren konnte, und die zweite NACK anzeigt, dass die erste UE die zweite Nachricht nicht erfolgreich dekodieren konnte.

**2.** Verfahren nach Anspruch 1, weiter umfassend, nach dem Übertragen des zweiten überlagerten Signals und ohne eine erneute Übertragung der ersten Nachricht, der Empfang einer positiven Bestätigung, ACK, die von die erste UE übertragen wird, wobei die ACK anzeigt, dass die erste UE die erste Nachricht erfolgreich dekodiert hat.

3. Verfahren nach Anspruch 1, weiter umfassend:

nach dem erneuten Übertragen der zweiten Nachricht, Feststellen, dass die erste UE die erste Nachricht immer noch nicht dekodieren kann, aber die zweite UE die zweite Nachricht erfolgreich dekodiert hat; und
als Ergebnis der Feststellung, dass die erste UE immer noch nicht die erste Nachricht dekodieren kann, aber die zweite UE die zweite Nachricht erfolgreich dekodiert hat, erneute Übertragung der ersten Nachricht.

4. Verfahren nach einem der Ansprüche 1 bis 3, wobei nach der Entscheidung, die zweite Nachricht, nicht aber die erste Nachricht erneut zu übertragen, die erste UE darüber informiert wird, dass die zweite Nachricht erneut übertragen wird.

5. Verfahren nach einem der Ansprüche 1-4, wobei die dritte Nachricht keinen Teil der ersten Nachricht enthält.

6. Verfahren (500), das von einer ersten Benutzerausrüstung, UE (101), durchgeführt wird, um von einem Netzwerkknoten übertragene Nachrichten zu empfangen, wobei das Verfahren umfasst:

Empfangen durch die erste UE (s502) eines ersten überlagerten Signals, das durch den Netzwerkknoten übertragen wird, wobei das erste überlagerte Signal eine erste Nachricht für die erste UE und eine zweite Nachricht für eine zweite UE umfasst;
Versuch (s504) der ersten UE, die zweite Nachricht für die zweite UE zu dekodieren, bevor sie versucht, die erste Nachricht für die erste UE zu dekodieren;
nach dem Versuch, die zweite Nachricht zu dekodieren, Bereitstellung (s506) einer Anzeige an den Netzwerkknoten durch die erste UE, die angibt, dass die zweite Nachricht nicht erfolgreich dekodiert wurde;
Pufferung (s508) des ersten überlagerten Signals durch die erste UE;
nach dem Bereitstellen der Anzeige an den Netzwerkknoten, Empfangen (s510) durch die erste UE eines zweiten überlagerten Signals, das durch den Netzwerkknoten übertragen wird, wobei das zweite überlagerte Signal die zweite Nachricht für die zweite UE und eine dritte Nachricht für die erste UE umfasst, aber nicht die erste Nachricht für die erste UE enthält, wobei die dritte Nachricht sich von der ersten Nachricht unterscheidet;
nach dem Empfang des zweiten überlagerten Signals, erfolgreicher Dekodierung (s512) der zweiten Nachricht für die zweite UE durch die erste UE;
nach erfolgreicher Dekodierung der zweiten Nachricht für das zweite UE, Verwendung (s514) der dekodierten zweiten Nachricht und des gepufferten ersten überlagerten Signals durch die erste UE zur Dekodierung der ersten Nachricht aus dem ersten überlagerten Signal, **dadurch gekennzeichnet, dass**
das Bereitstellen der Anzeige für den Netzknoten das Übertragen einer negativen Bestätigung, NACK, durch die erste UE umfasst, die anzeigt, dass das erste UE die zweite Nachricht nicht erfolgreich dekodieren konnte.

7. Verfahren nach Anspruch 6, weiter umfassend, nach dem Empfang des zweiten überlagerten Signals und ohne eine erneute Übertragung der ersten Nachricht zu empfangen, das Übertragen einer positiven Bestätigung, ACK, wobei die ACK anzeigt, dass die erste UE die erste Nachricht erfolgreich dekodiert hat.

8. Verfahren nach einem der Ansprüche 6 bis 7, das weiter den Empfang von Informationen umfasst, die von dem Netzwerkknoten übertragen werden, wobei die Informationen anzeigen, dass die zweite Nachricht erneut übertragen wird.

9. Verfahren nach einem der Ansprüche 6-8, wobei die dritte Nachricht keinen Teil der ersten Nachricht enthält.

10. Computerprogramm (743, 943) mit Befehlen (744, 944), die, wenn sie von einer Verarbeitungsschaltung (755, 955) ausgeführt werden, die Verarbeitungsschaltung veranlassen, das Verfahren nach einem der Ansprüche 1-9 auszuführen.

11. Träger, der das Computerprogramm nach Anspruch 10 enthält, wobei der Träger ein elektronisches Signal, ein optisches Signal, ein Funksignal oder ein computerlesbares Speichermedium (742, 942) ist.

12. Netzwerkknoten (105), wobei der Netzwerkknoten umfasst:

eine Sendeeinheit (902) zum Verwenden eines Senders, um ein erstes überlagertes Signal zu übertragen, das eine erste Nachricht für eine erste UE, UE1, und eine zweite Nachricht für eine zweite UE, UE2, umfasst;

eine Empfängereinheit (904) zum Einsatz eines Empfängers, um i) eine von UE1 übertragene Nachricht zu erhalten, die anzeigt, dass die UE1 die erste Nachricht für UE1 und die zweite Nachricht für UE2 nicht dekodieren konnte, und ii) eine von UE2 übertragene Nachricht zu erhalten, die anzeigt, dass die UE2 die zweite Nachricht nicht dekodieren konnte; und

eine Wiederübertragungseinheit (906) zum Verzögern der erneuten Übertragung der ersten Nachricht, aber nicht zum Verzögern der erneuten Übertragung der zweiten Nachricht, indem der Sender verwendet wird, um ein zweites überlagertes Signal zu übertragen, das eine dritte Nachricht für UE1 und die zweite Nachricht für UE2 umfasst, **dadurch gekennzeichnet, dass**

die von UE1 übertragene Nachricht, die anzeigt, dass UE1 nicht in der Lage war, die erste Nachricht für UE1 zu dekodieren, und die zweite Nachricht für UE2 eine erste negative Bestätigung, NACK, entsprechend der ersten Nachricht und eine zweite NACK entsprechend der zweiten Nachricht umfasst.

**13.** Erste Benutzerausrüstung (101, 102), wobei die erste Benutzerausrüstung, UE1, umfasst:

eine Empfängereinheit (1102) zum Einsatz eines Empfängers, um ein erstes überlagertes Signal zu empfangen, das von einem Netzwerkknoten übertragen wird, wobei das erste überlagerte Signal eine erste Nachricht für die erste UE und eine zweite Nachricht für eine zweite UE umfasst;

eine Dekodiereinheit (1104), die versucht, die zweite Nachricht aus dem ersten überlagerten Signal zu dekodieren, bevor sie versucht, die erste Nachricht für die erste UE zu dekodieren;

eine Anzeigebereitstellungseinheit (1106) zum Bereitstellen einer Anzeige für den Netzwerkknoten, die anzeigt, dass die zweite Nachricht nicht erfolgreich dekodiert worden ist; und

eine Pufferungseinheit (1108) zum Puffern des ersten überlagerten Signals, wobei

die Empfängereinheit (1102) weiter betreibbar ist, um den Empfänger zu verwenden, um ein zweites überlagertes Signal zu empfangen, das von dem Netzwerkknoten übertragen wird, wobei das zweite überlagerte Signal die zweite Nachricht für die zweite UE und eine dritte Nachricht für die erste UE umfasst, aber nicht die erste Nachricht für die erste UE enthält, wobei die dritte Nachricht sich von der ersten Nachricht unterscheidet, und die Dekodiereinheit (1104) weiter betreibbar ist, um die zweite Nachricht für die zweite UE zu dekodieren und, nach erfolgreichem Dekodieren der zweiten Nachricht für die zweite UE, die dekodierte zweite Nachricht und das gepufferte erste überlagerte Signal zu verwenden, um die erste Nachricht aus dem ersten überlagerten Signal zu dekodieren, **dadurch gekennzeichnet, dass**

die Einheit, die die Anzeige bereitstellt, so konfiguriert ist, dass sie dem Netzknoten die Anzeige bereitstellt, indem sie eine negative Bestätigung, NACK, übertragt, die anzeigt, dass die erste UE die zweite Nachricht nicht erfolgreich decodieren konnte.

## Revendications

**1.** Procédé (400) de transmission de messages à un premier équipement utilisateur, UE (101), et à un second UE (102), le procédé étant réalisé par un noeud de réseau (105) et comprenant :

la transmission (s402) d'un premier signal superposé comprenant un premier message pour le premier UE et un deuxième message pour le second UE ; et

la détermination (s406) que le second UE n'a pas été apte à décoder avec succès le deuxième message, le procédé comprend en outre :

la détermination (s404) que le premier UE n'a pas été apte à décoder avec succès l'un ou l'autre du premier message et du deuxième message ;

en réponse à la détermination que le premier UE n'a pas été apte à décoder avec succès l'un ou l'autre du premier message et du deuxième message et que le second UE n'a pas été apte à décoder avec succès le deuxième message, la décision (s408) de retransmettre le deuxième message mais pas le premier message ; et

la retransmission (s410) du deuxième message en transmettant un second signal superposé comprenant le deuxième message pour le second UE et un troisième message pour le premier UE mais n'incluant pas le premier message, dans lequel le troisième message est différent du premier message, dans lequel le procédé est **caractérisé en ce que** la détermination que le premier UE n'a pas été apte à décoder avec succès l'un ou l'autre du premier message et du deuxième message comprend la réception d'un premier accusé de réception négatif, NACK, correspondant au premier message et d'un second NACK correspondant au deuxième message, le premier NACK indiquant que le premier UE n'a pas été apte à décoder avec succès le premier message, et le second NACK indiquant que le premier UE n'a pas été apte à décoder avec succès le deuxième message.

**2.** Procédé selon la revendication 1, comprenant en outre, après la transmission du second signal superposé et sans une quelconque retransmission du premier message, la réception d'un accusé de réception positif, ACK, transmis par le premier UE, l'ACK indiquant que le premier UE a décodé avec succès le premier message.

**3.** Procédé selon la revendication 1, comprenant en outre :

après la retransmission du deuxième message, la détermination que le premier UE reste inapte à décoder le premier message, mais que le second UE a décodé avec succès le deuxième message ; et
en résultat de la détermination que le premier UE reste inapte à décoder le premier message, mais que le second UE a décodé avec succès le deuxième message, la retransmission du premier message.

**4.** Procédé selon l'une quelconque des revendications 1-3, comprenant en outre, après la décision de retransmettre le deuxième message mais pas le premier message, la notification au premier UE que le deuxième message est en cours de retransmission.

**5.** Procédé selon l'une quelconque des revendications 1-4, dans lequel le troisième message ne comprend pas de quelconque partie du premier message.

**6.** Procédé (500) réalisé par un premier équipement utilisateur, UE (101), permettant de recevoir des messages transmis par un noeud de réseau, le procédé comprenant :

la réception (s502) par le premier UE d'un premier signal superposé transmis par le noeud de réseau, le premier signal superposé comprenant un premier message pour le premier UE et un deuxième message pour un second UE ;
la tentative (s504) par le premier UE de décoder le deuxième message pour le second UE avant la tentative de décoder le premier message pour le premier UE ;
après la tentative de décoder le deuxième message, la fourniture (s506) par le premier UE d'une indication au noeud de réseau indiquant que le deuxième message n'a pas été décodé avec succès ;
la mise en tampon (s508) par le premier UE du premier signal superposé ;
après la fourniture de l'indication au noeud de réseau, la réception (s510) par le premier UE d'un second signal superposé transmis par le noeud de réseau, le second signal superposé comprenant le deuxième message pour le second UE et un troisième message pour le premier UE mais n'incluant pas le premier message pour le premier UE, dans lequel le troisième message est différent du premier message ;
après la réception du second signal superposé, le décodage avec succès (s512) par le premier UE du deuxième message pour le second UE ;
après le décodage avec succès du deuxième message pour le second UE, l'utilisation (s514) par le premier UE du deuxième message décodé et du premier signal superposé mis en tampon pour décoder le premier message à partir du premier signal superposé, **caractérisé en ce que**
la fourniture de l'indication au noeud de réseau comprend la transmission par le premier UE d'un accusé de réception négatif, NACK, indiquant que le premier UE n'a pas été apte à décoder avec succès le deuxième message.

**7.** Procédé selon la revendication 6, comprenant en outre, après la réception du second signal superposé et sans la réception d'une quelconque retransmission du premier message, la transmission d'un accusé de réception positif, ACK, l'ACK indiquant que le premier UE a décodé avec succès le premier message.

**8.** Procédé selon l'une quelconque des revendications 6-7, comprenant en outre la réception d'informations transmises par le noeud de réseau, les informations indiquant que le deuxième message est en cours de retransmission.

**9.** Procédé selon l'une quelconque des revendications 6-8, dans lequel le troisième message ne comprend pas de quelconque partie du premier message.

**10.** Programme informatique (743, 943) comprenant des instructions (744, 944) qui, lorsqu'il est exécuté par un circuit de traitement (755, 955), amène le circuit de traitement à exécuter le procédé de l'une quelconque des revendications 1-9.

**11.** Support contenant le programme informatique selon la revendication 10, dans lequel le support est l'un parmi un signal électronique, un signal optique, un signal radio et un support de stockage lisible par ordinateur (742, 942).

**12.** Noeud de réseau (105), le noeud de réseau comprenant :

une unité de transmission (902) permettant d'employer un émetteur pour transmettre un premier signal superposé comprenant un premier message pour un premier UE, UE1, et un deuxième message pour un second UE, UE2 ;
une unité réceptrice (904) permettant d'employer un récepteur pour i) obtenir un message transmis par l'UE1 indiquant que l'UE1 a été inapte à décoder le premier message pour l'UE1 et le deuxième message pour l'UE2 et ii) obtenir un message transmis par l'UE2 indiquant que l'UE2 a été inapte à décoder le deuxième message ; et
une unité de retransmission (906) permettant de retarder la retransmission du premier message, mais pas de retarder la retransmission du deuxième message en employant l'émetteur pour transmettre un second signal superposé comprenant un troisième message pour l'UE1 et le deuxième message pour l'UE2, **caractérisé en ce que**
le message transmis par l'UE1 indiquant que l'UE1 a été inapte à décoder le premier message pour l'UE1 et le deuxième message pour l'UE2 comprend un premier accusé de réception négatif, NACK, correspondant au premier message et un second NACK correspondant au deuxième message.

**13.** Premier équipement utilisateur (101, 102), le premier équipement utilisateur, UE1, comprenant :

une unité réceptrice (1102) permettant d'employer un récepteur pour recevoir un premier signal superposé transmis par un noeud de réseau, le premier signal superposé comprenant un premier message pour le premier UE et un deuxième message pour un second UE ;
une unité de décodage (1104) permettant de tenter de décoder le deuxième message à partir du premier signal superposé avant de tenter de décoder le premier message pour le premier UE ;
une unité de fourniture d'indication (1106) permettant de fournir une indication au noeud de réseau indiquant que le deuxième message n'a pas été décodé avec succès ; et
une unité de mise en tampon (1108) permettant de mettre en tampon le premier signal superposé, dans lequel l'unité réceptrice (1102) a en outre pour fonction d'employer le récepteur pour recevoir un second signal superposé transmis par le noeud de réseau, le second signal superposé comprenant le deuxième message pour le second UE et un troisième message pour le premier UE mais n'incluant pas le premier message pour le premier UE, dans lequel le troisième message est différent du premier message, et
l'unité de décodage (1104) a en outre pour fonction de décoder le deuxième message pour le second UE et, après le décodage avec succès du deuxième message pour le second UE, d'utiliser le deuxième message décodé et le premier signal superposé mis en tampon pour décoder le premier message à partir du premier signal superposé, **caractérisé en ce que**
l'unité de fourniture d'indication est configurée pour fournir l'indication au noeud de réseau en transmettant un accusé de réception négatif, NACK, indiquant que le premier UE n'a pas été apte à décoder avec succès le deuxième message.

100

111

host

110

105

101

102

FIG. 1

| UE1 receives $Y_1$ | UE1 uses SIC to obtain $M_1$ | NACK |
|---|---|---|
| UE2 receives $Y_2$ | UE2 obtains $M_2$ | sleep | ACK |

Slot t

FIG. 2

| UE1 receives $Y_1(t1)$ | UE1 uses SIC to attempt to obtain M1 and M2 | NACK1 NACK2 |
|---|---|---|
| UE2 receives $Y_2(t1)$ | UE2 tries to obtain M2 | sleep | NACK2 |

Slot t1

| UE1 receives $Y_1(t2)$ | UE1 uses SIC to attempt to obtain $M_2$ and $M_3$ | ACK3 ACK1 |
|---|---|---|
| UE2 receives $Y_2(t2)$ | UE2 tries to obtain M2 | ACK2 |

Slot t2

FIG. 3

400

The NN transmits, during a first time slot (t1), a first superimposed signal (S(t1)) comprising a first message (M1) for a first UE and a second message (M2) for a second UE — s402

The NN determines that the first UE was not able to successfully decode either the first message or the second message — s404

The NN determines that the second UE was not able to successfully decode the second message — s406

In response to determining that the first UE was not able to successfully decode either the first message or the second message and that the second UE was not able to successfully decode the second message, the NN decides to retransmit the second message but not the first message — s408

the NN retransmits the second message by transmitting a second superimposed signal comprising the second message for the second UE and a third message for the first UE but not including the first message, wherein the third message is different than the first message (e.g., the third message does not comprise any portion of the first message) — s410

FIG. 4

500

s502
UE1 receives a first superimposed signal transmitted by the network node, the first superimposed signal comprising a first message (M1) for UE1 and a second message (m2) for UE2

s504
UE1 attempts to decode the second message prior to attempting to decode the first message

s506
UE1 provides an indication to the network node indicating that the second message has not been successfully decoded

s508
UE1 buffer the first superimposed signal

s510
UE1 receives a second superimposed signal transmitted by the network node, the second superimposed signal comprising the second message and a third message for UE1 but not including the first message for UE1

s512
UE1 successfully decodes the second message for UE2

s514
UE1 uses the decoded second message and the buffered first superimposed signal to decode the first message from the first superimposed signal

FIG. 5

600

s602
The NN schedules the first UE to transmit the first message using a
first time and frequency resource

s604
The NN schedules the second UE to transmit the second message
using the first time and frequency resource

s606
The NN receives a first signal comprising the first message and the
second message

s608
The NN buffers the first signal

s610
The NN schedules the first UE to retransmit the first message using a
second time and frequency resource

s612
The NN schedules the second UE to transmit a third message using
the second time and frequency resource

FIG. 6

700

s702

UE1 receives a first scheduling message (e.g., DCI) transmitted by the network node

s704

as a result of receiving the first scheduling message, UE1 transmits a first signal comprising a first message

s706

UE1 buffers the first message in case the network node requires the UE to retransmit the first message

s708

UE1 receives a second scheduling message transmitted by the network node

s710

as a result of receiving the second scheduling message, UE1 transmits a second signal comprising a second message but not comprising the first message

s712

after transmitting the second signal, UE1 receives: i) acknowledgment information transmitted by the network node, wherein the acknowledgment information indicates that the network node has been able to obtain the first message from the first signal and the second message from the second signal, or ii) a request to retransmit the first message

FIG. 7

FIG. 8

105

Transmission unit
902

Receiver unit
904

Retransmission unit
906

FIG. 9A

105

Scheduling unit
922

Receiver unit
924

Buffering unit
926

Determining unit
928

FIG. 9B

FIG. 10

101, 102

receiver unit
1102

decoding
unit
1104

indication
providing
unit
1106

buffering
unit
1108

FIG. 11A

101, 102

receiver unit
1122

transmission
unit
1124

buffering
unit
1126

FIG. 11B

FIG. 12

1310 **Host computer**

1311
**SW**

1312
Host application

1315
**HW**

1316
Communication interface

1318
Processing circuitry

1360

1320 **Base station**

1321
**SW**

1325
**HW**

1326
Communication interface

1327
Radio interface

1328
Processing circuitry

1370

1300

1330 **UE**

1331
**SW**

1332
Client application

1335
**HW**

1337
Radio interface

1338
Processing circuitry

1350

FIG. 13

BEGIN

s1410
Host computer
provides user
data

s1411
Host computer
executes host
application

s1420
Host computer
initiates
transmission
carrying the
user data to the
UE

s1430
Base station
transmits the
user data

s1440
UE executes
client
application

END

FIG. 14

```
        ╭─────────────╮
        │    BEGIN     │
        ╰──────┬──────╯
               │
        ┌──────┴──────┐
        │   s1510      │
        │ Host computer│
        │ provides user│
        │    data      │
        └──────┬──────┘
               │
        ┌──────┴──────┐
        │   s1520      │
        │ Host computer│
        │  initiates   │
        │ transmission │
        │ carrying the │
        │user data to the│
        │     UE       │
        └──────┬──────┘
               │
        ┌─ ─ ─ ┴ ─ ─ ─┐
        │   s1530      │
        │ UE receives the│
        │  user data   │
        └─ ─ ─ ┬ ─ ─ ─┘
               │
        ╭──────┴──────╮
        │    END       │
        ╰─────────────╯
```

FIG. 15

BEGIN

s1610
UE receives
input data
provided at host
computer

s1611
UE executes
client
application

s1620
UE provides
user data

s1621
UE executes
client
application

s1630
UE initiates
transmission of
the user data to
the host
computer

s1640
Host computer
receives user
data
transmitted
from the UE

END

FIG. 16

FIG. 17

**REFERENCES CITED IN THE DESCRIPTION**

**Patent documents cited in the description**

- US 20160191174 A